# EUROPÄISCHE PATENTSCHRIFT

(11) **EP 2 786 921 B1**
(45) Veröffentlichungstag und Bekanntmachung des Hinweises auf die Patenterteilung: **20.09.2017**
(21) Anmeldenummer: 13170285.4
(22) Anmeldetag: 03.06.2013
(51) Int. Cl.: B62D 27/02, B62D 21/09

(54) **Klebeverbindung eines ersten Hohlprofils mit einem zweiten Hohlprofil**
Adhesive joining of a first hollow profile to a second hollow profile
Liaison adhésive d'un premier profil creux avec un second profil creux

(30) Priorität: 04.04.2013 EP 13162270
(43) Veröffentlichungstag der Anmeldung: 08.10.2014
(73) Patentinhaber: MAGNA STEYR Engineering AG & Co KG, 8041 Graz (AT)
(72) Erfinder: Ehrlich, Philipp, 8042 Graz (AT); Erlacher, Manuel, 9545 Radenthein (AT); Hofer, Bernhard, 8053 Graz (AT); Hörmann, Reinhard, 8151 Hitzendorf (AT); Maier, Stefan, 9473 Lavamünd (AT); Planka, Franz, 9433 St. Andrä (AT); Rucker, Michael, 8504 Preding (AT); Rud, Stefan, 8041 Graz (AT); Spary, Anton, 8041 Graz (AT); Zachnegger, Harald, 8041 Graz (AT)
(74) Vertreter: Zangger, Bernd

(56) Entgegenhaltungen:
- WO-A1-03/089221
- AT-U1- 8 606
- DE-A1-102009 015 637
- US-A1- 2012 235 401

## Beschreibung

### Gebiet der Erfindung

Die vorliegende Erfindung betrifft eine Klebeverbindung eines ersten Hohlprofils mit einem zweiten Hohlprofil, wobei das zweite Hohlprofil in einem Überlappungsbereich vom ersten Hohlprofil umgeben ist.

### Stand der Technik

Verbundene Hohlprofile können beispielsweise bei der Herstellung von Tragstrukturen für Kraftfahrzeuge, insbesondere in der sogenannten "Space-Frame" Bauweise von Karosserien eingesetzt werden.

Zur Verbindung zweier Hohlprofile ist es bekannt eines der Hohlprofile in das andere zu stecken und im Überlappungsbereich die beiden Hohlprofile beispielsweise zu verschweißen, zu verclipsen, oder zu verkleben. Einfache Klebeverbindungen sind aber nur mäßig sicher, insbesondere bei ungenauer Passung oder Verzug der Hohlprofile.

Aus der DE 10 2006 044 799 A1 ist beispielsweise ein Karosseriemodul für einen Kraftwagen mit einer Mehrzahl von miteinander verbundenen Trägerprofilen, deren Trägerenden in Aufnahmeöffnungen von an das Karosseriemodul angrenzenden weiteren Trägerprofilen einzustecken sind bekannt, wobei die Trägerenden separaten Riegelelementen zugeordnet sind, welche verschiebbar am zugehörigen Trägerprofil gehalten sind und durch Verschieben gegenüber dem zugehörigen Trägerprofil in die jeweilige Aufnahmeöffnung des entsprechenden an das Karosseriemodul angrenzenden weiteren Trägerprofils einzustecken sind. Eine Klebeverbindung kann zwischen dem Riegelelement und der zugehörigen Aufnahmeöffnung vorgenommen sein.

Aus der gattungemäßen AT 8 606 U1 ist ein Kraftfahrzeug bekannt, mit aus einem Unterteil und einem Oberteil bestehenden Körper, welche an Schnittstellen mit Vertiefungen miteinander verklebt sind, von denen einige im Wesentlichen in der Gürtellinie ausgebildet sind, wobei zur Ausbildung der Schnittstellen am Unterteil oben offene Taschen und Anschläge in Z-Richtung, und am Oberteil vertikal abwärts gerichtete Fortsätze vorgesehen sind, welche in die Taschen bis zu einer von den Anschlägen bestimmten Tiefe versenkbar sind, wobei die Taschen in X-Richtung und Y-Richtung weiter als die Fortsätze und zur Herstellung der Verbindung mit einem Kleber befüllt sind.

### Zusammenfassung der Erfindung

Es ist eine Aufgabe der Erfindung, eine Klebeverbindung eines ersten Hohlprofils mit einem zweiten Hohlprofil anzugeben die einfach und kostengünstig herstellbar ist und doch zuverlässig ist.
Die Lösung der Aufgabe erfolgt durch eine Klebeverbindung nach Anspruch 1.
Erfindungsgemäß wird als zusätzliches Bauteil ein Kern im Überlappungsbereich der Hohlprofile verwendet, der zumindest teilweise die Innenform des inneren der beiden Hohlprofile, nämlich des zweiten Hohlprofils, nachbildet, so dass der Kern zumindest bereichsweise einer Innenseite des zweiten Hohlprofils im Wesentlichen parallel gegenüber liegt. In einem rechteckigen Hohlprofil kann dies beispielsweise ein quaderförmiger Kern sein, in einem kreisförmigen Hohlprofil kann dies beispielsweise ein zylindrischer Kern sein. Bevorzugt weist der Kern und das zweite Hohlprofil, besonders bevorzugt auch das erste Hohlprofil, die selbe Geometrie des Querschnitts auf, wobei der Kern jedoch kleiner als das zweite Hohlprofil und dieses wieder kleiner als das erste Hohlprofil ausgebildet ist. Die Begrenzungsfläche ist "im Wesentlichen parallel", da die Begrenzungsfläche auch unstetig ausgebildet sein kann bzw. auch eine leicht konische Form oder eine poröse/löchrige Oberfläche aufweisen kann.

Auf diese Weise wird zumindest eine zusätzliche Klebefläche bereitgestellt, zwischen dem mit dem ersten Hohlprofil verbundenen Kern und dem zweiten Hohlprofil, so dass das innere Hohlprofil, vorzugsweise zusätzlich zu einer Verklebung mit dem ersten Hohlprofil an der Außenseite des zweiten Hohlprofils, auch an der Innenseite des zweiten Hohlprofils mit dem Kern verklebt werden kann.

Erfindungsgemäß ist der Kern ein Vollkörper, und besteht aus Schaummaterial. Solche Kerne können auch Beulkräfte übernehmen und zudem wirkungsvoll unerwünschte Geräusche dämpfen, beispielsweise bei der Verwendung der Hohlprofile in einem Tragwerk eines Fahrzeuges.

Der Kern wird erfindungsgemäß als Blähformteil ausgeführt, welcher sich nach dem Aushärten des Kleberbades mittels Temperatur in seinem Volumen ausdehnt und so akustisch Vorteile bringt. Somit bildet der Kern im kalten Zustand den Abschluss bzw. die Begrenzung für das Kleberbad und kommt es durch Aufbringung der zur Aushärtung notwendigen Erhitzung auf Grund von Expansion des Kernes (Blähformteil bzw. Schaum) zu einer Schallabdichtung des Hohlprofiles.

Weiterbildungen der Erfindung sind in den abhängigen Ansprüchen, der Beschreibung sowie den beigefügten Zeichnungen angegeben.

Bevorzugt weist der Kern zwei, drei oder mehr Begrenzungsflächen, die zu zwei, drei oder mehr Innenseiten des zweiten Hohlprofils gegenüberliegend, also im Wesentlichen parallel und benachbart, angeordnet sind, insbesondere zu allen Innenseiten des zweiten Hohlprofils, wobei Klebstoff zwischen dem Kern und den gegenüberliegenden Innenseiten des zweiten Hohlprofils angeordnet ist.

Bevorzugt ist der Kern quaderförmig, würfelförmig oder zylindrisch.

Gemäß einer Ausführungsform der Erfindung ist der Kern an einem Deckel oder Boden des ersten Hohlprofils befestigt, insbesondere angeschraubt. Hierdurch wird ein möglicherweise ohnehin erforderlicher Deckel oder Boden des ersten Hohlprofils auch zur Herstellung der Verbindung zum Kern und somit zur Bereitstellung eines Raumes, der mit Klebstoff gefüllt werden kann, verwendet.

Gemäß einer bevorzugten Ausführungsform weist der Kern einen Bund, also eine Verbreiterung auf, der in das erste Hohlprofil geklemmt ist. Der Bund kann einstückig mit dem Kern ausgeführt sein oder auch durch ein am Kern fixiertes Bauteil gebildet werden.

Bevorzugt ist Klebstoff zwischen der Außenseite des zweiten Holprofils und der Innenseite des ersten Hohlprofils angeordnet.

Ein Verfahren zur Herstellung einer Klebeverbindung weist erfindungsgemäß die Schritte auf, dass
- im Überlappungsbereich, innerhalb des ersten Hohlprofils, ein Kern zumindest zeitweilig am ersten Hohlprofil befestigt wird,
- Klebstoff zwischen dem Kern und der Innenseite des ersten Hohlprofils angeordnet wird,
- ein zweites Hohlprofil außerhalb des Kerns in das erste Hohlprofil gesteckt wird, so dass das zweite Hohlprofil in den Klebstoff eintaucht, so dass das zweite Hohlprofil in einem Überlappungsbereich vom ersten Hohlprofil umgeben ist und der Kern zumindest eine Begrenzungsfläche aufweist, die zu einer Innenseite des zweiten Hohlprofils parallel angeordnet ist und dass Klebstoff zwischen dem Kern und der Innenseite des zweiten Hohlprofils angeordnet ist.

### Kurzbeschreibung der Zeichnungen

Die Erfindung wird im Folgenden beispielhaft unter Bezugnahme auf die Zeichnungen beschrieben.
- Fig. 1: ist eine Schnittdarstellung eines Schrittes zur Herstellung einer Klebeverbindung zweier Hohlprofile von der Seite bzw. als Schnitt.
- Fig. 2: ist eine Schnittdarstellung eines weiteren Schrittes zur Herstellung einer Klebeverbindung zweier Hohlprofile von der Seite bzw. die fertige Klebeverbindung eines ersten Hohlprofils mit einem zweiten Hohlprofil.
- Fig. 3: ist eine Schnittdarstellung eines Schrittes zur Herstellung einer Klebeverbindung zweier Hohlprofile von der Seite in einer weiteren Ausführungsform.

### Detaillierte Beschreibung der Erfindung

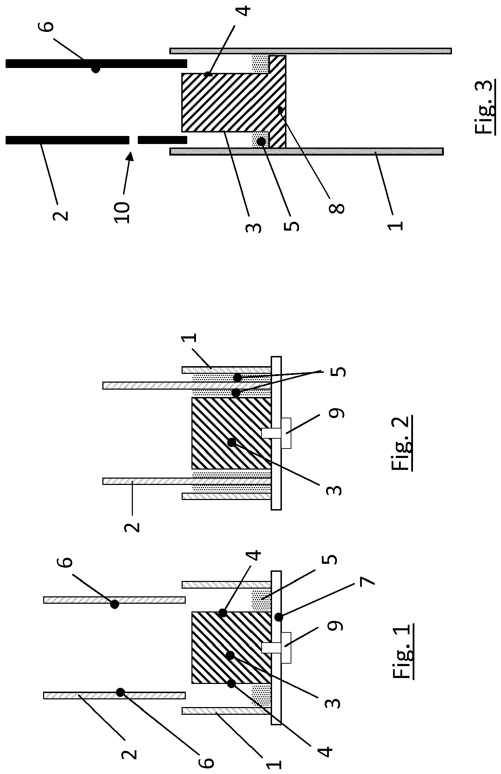

In den Fig. 1-3 ist eine erfindungsgemäße Klebeverbindung und ein Verfahren zur Herstellung der Klebeverbindung dargestellt.

Die Klebeverbindung besteht zwischen einem ersten Hohlprofil 1 und einem zweiten Hohlprofil 2, wobei das zweite Hohlprofil 2 in einem Überlappungsbereich vom ersten Hohlprofil 1 umgeben ist. Das zweite Hohlprofil 2 ist also jeweils in das erste Hohlprofil 1 gesteckt.

Im Überlappungsbereich, innerhalb des ersten Hohlprofils 1 und des zweiten Hohlprofils 2, ist ein mit dem ersten Hohlprofil 1 über den Deckel oder Boden 7 verbundener Kern 3 angeordnet, der als würfel- oder quaderförmiger Vollkörper aus Schaummaterial ausgebildet ist. Der Kern 3 weist als Seitenwände vier Begrenzungsflächen 4 auf, die zu jeweils einer Innenseite 6 des zweiten Hohlprofils 2 parallel und benachbart angeordnet ist. Klebstoff 5 wird zwischen den Kern 3 und die Innenseiten 6 des zweiten Hohlprofils 2 eingefüllt (Fig. 1). Daraufhin wird das zweite Hohlprofil 2 in den mit Klebstoff 5 gefüllten Bereich geschoben, bis zum Deckel oder Boden 7, der als Anschlag wirkt, so dass jeweils beiden Seiten der Wände des zweiten Hohlprofils 2 von Klebstoff umgeben sind (Fig. 2).

Wesentliche Funktion des Kernes 3 ist es, den inneren Abschluss des Kleberbades zu bilden. Weiters quillt der Klebstoff 5 durch das Hineindrücken des Hohlprofiles 2 in das Hohlprofil 1, bedingt durch den Kern 3, nach oben bzw. an oder über den oberen Rand der Enden des Hohlprofils 1, wodurch kontrolliert werden kann, dass genügend Klebstoff 5 vorhanden war bzw. sich der Klebstoff 5 auch über die gesamte Verbindungsfläche verteilt hat.

Der Kern 3 ist über eine Zentrierschraube 9 am Deckel oder Boden 7 befestigt. Die Zentrierschraube 9 könnte nach der Verklebung auch entfernt werden. Der Kern 3 kann daher beispielsweise nur während der Klebung durch die Zentrierschraube 9 am Deckel 7 des ersten Hohlprofils 1 fixiert sein.

Der Kern 3 kann alternativ oder zusätzlich auch so ausgebildet sein, dass er einen Bund 8 aufweist, der mit leichtem Übermaß in das erste Hohlprofil 1 geklemmt ist (Fig. 3). Auf diese Weise wird wieder, durch die Innenwände des ersten Hohlprofils 1, den Bund 10 und die Begrenzungsflächen 4 des Kerns 3, ein Raum für eine Kleberfüllung geschaffen, so dass das zu befestigende Hohlprofil 2 in das Kleberbad eingetaucht werden kann. Eine Bohrung 10 im zweiten Hohlprofil 2 ermöglicht den Durchtritt von Klebstoff 5 für besseren Halt des zweiten Hohlprofils 2.

### Bezugszeichenliste

- 1: erstes Hohlprofil
- 2: zweites Hohlprofil
- 3: Kern
- 4: Begrenzungsfläche des Kerns
- 5: Klebstoff
- 6: Innenseite des zweiten Hohlprofils
- 7: Deckel oder Boden
- 8: Bund
- 9: Zentrierschraube
- 10: Bohrung

## Patentansprüche

1. Klebeverbindung eines ersten Hohlprofils (1) mit einem zweiten Hohlprofil (2), wobei das zweite Hohlprofil (2) in einem Überlappungsbereich vom ersten Hohlprofil (1) umgeben ist,
wobei im Überlappungsbereich, innerhalb des ersten Hohlprofils (1) und des zweiten Hohlprofils (2), ein mit dem ersten Hohlprofil (1) verbundener Kern (3) angeordnet ist, wobei der Kern (3) zumindest eine Begrenzungsfläche (4) aufweist, die zu einer Innenseite (6) des zweiten Hohlprofils (2) im Wesentlichen parallel und benachbart angeordnet ist, wobei Klebstoff (5) zwischen dem Kern (3) und der Innenseite (6) des zweiten Hohlprofils (2) angeordnet ist,
**dadurch gekennzeichnet, dass** der Kern (3) ein Vollkörper ist aus Schaummaterial und ein Blähformteil ist, welches sich durch Erhitzung ausdehnt und so zu einer Schallabdichtung des Hohlprofiles führt.

2. Klebeverbindung nach Anspruch 1,
**dadurch gekennzeichnet, dass** der Kern (3) zwei, drei oder mehr Begrenzungsflächen (4) aufweist, die zu zwei, drei oder mehr Innenseiten (6) des zweiten Hohlprofils gegenüberliegend angeordnet sind, insbesondere zu allen Innenseiten (6) des zweiten Hohlprofils, wobei Klebstoff (5) zwischen dem Kern (3) und den gegenüberliegenden Innenseiten (6) des zweiten Hohlprofils (2) angeordnet ist.

3. Klebeverbindung nach zumindest einem der zuvor genannten Ansprüche,
**dadurch gekennzeichnet, dass** der Kern (3) den inneren Abschluss eines Kleberbades bildet.

4. Klebeverbindung nach zumindest einem der zuvor genannten An sprüche,
**dadurch gekennzeichnet, dass** der Kern (3) quaderförmig, würfelförmig oder zylindrisch ist.

5. Klebeverbindung nach zumindest einem der zuvor genannten Ansprüche,
**dadurch gekennzeichnet, dass** der Kern (3) an einem Deckel oder Boden (7) des ersten Hohlprofils (1) befestigt, insbesondere angeschraubt ist.

6. Klebeverbindung nach zumindest einem der zuvor genannten Ansprüche,
**dadurch gekennzeichnet, dass** der Kern (3) einen Bund (8) aufweist, der in das erste Hohlprofil (1) geklemmt ist.

7. Klebeverbindung nach zumindest einem der zuvor genannten Ansprüche,
**dadurch gekennzeichnet, dass** Klebstoff (5) zwischen der Außenseite des zweiten Holprofils (2) und der Innenseite (6) des ersten Hohlprofils (1) angeordnet ist.

8. Verfahren zur Herstellung einer Klebeverbindung nach Anspruch 1,
**dadurch gekennzeichnet, dass**
- im Überlappungsbereich, innerhalb des ersten Hohlprofils (1), ein Kern (3) zumindest zeitweilig am ersten Hohlprofil (1) befestigt wird, wobei der Kern (3) ein Vollkörper ist aus Schaummaterial und ein Blähformteil ist, welches sich durch Erhitzung ausdehnt und so zu einer Schallabdichtung des Hohlprofiles führt,
- Klebstoff (5) zwischen dem Kern (3) und der Innenseite (6) des ersten Hohlprofils (1) angeordnet wird,
- ein zweites Hohlprofil (2) außerhalb des Kerns (3) in das erste Hohlprofil (1) gesteckt wird, so dass das zweite Hohlprofil (2) in den Klebstoff (5) eintaucht,
so dass das zweite Hohlprofil (2) in einem Überlappungsbereich vom ersten Hohlprofil (1) umgeben ist und der Kern (3) zumindest eine Begrenzungsfläche (4) aufweist, die zu einer Innenseite (6) des zweiten Hohlprofils (2) im Wesentlichen parallel angeordnet ist und dass Klebstoff (5) zwischen dem Kern (3) und der Innenseite (6) des zweiten Hohlprofils (2) angeordnet ist.

## Claims

1. Adhesive connection of a first hollow profile (1) to a second hollow profile (2), wherein the second hollow profile (2) is surrounded by the first hollow profile (1) in an overlapping region,
wherein a core (3) connected to the first hollow profile (1) is arranged in the overlapping region, within the first hollow profile (1) and the second hollow profile (2), wherein the core (3) has at least one boundary surface (4) which is arranged in a manner substantially parallel and adjacent to an inner side (6) of the second hollow profile (2), wherein adhesive (5) is arranged between the core (3) and the inner side (6) of the second hollow profile (2),
**characterized in that** the core (3) is a solid body made of foam material and is a blow-moulded part which expands under the action of heat and thus leads to sound insulation of the hollow profile.

2. Adhesive connection according to Claim 1,
**characterized in that** the core (3) has two, three or more boundary surfaces (4) which are arranged opposite two, three or more inner sides (6) of the second hollow profile, in particular all the inner sides (6) of the second hollow profile, wherein adhesive (5) is arranged between the core (3) and the opposite inner sides (6) of the second hollow profile (2).

3. Adhesive connection according to at least one of the preceding claims,
**characterized in that** the core (3) forms the inner termination of an adhesive bath.

4. Adhesive connection according to at least one of the preceding claims,
**characterized in that** the core (3) is cuboidal, cube-shaped or cylindrical.

5. Adhesive connection according to at least one of the preceding claims,
**characterized in that** the core (3) is secured, in particular screwed, to a cover or base (7) of the first hollow profile (1).

6. Adhesive connection according to at least one of the preceding claims,
**characterized in that** the core (3) has a collar (8) which is clamped into the first hollow profile (1).

7. Adhesive connection according to at least one of the preceding claims,
**characterized in that** adhesive (5) is arranged between the outer side of the second hollow profile (2) and the inner side (6) of the first hollow profile (1).

8. Method for producing an adhesive connection according to Claim 1,
**characterized in that**
- a core (3) is at least temporarily secured to the first hollow profile (1) in the overlapping region, within the first hollow profile (1), wherein the core (3) is a solid body made of foam material and is a blow-moulded part which expands under the action of heat and thus leads to sound insulation of the hollow profile,
- adhesive (5) is arranged between the core (3) and the inner side (6) of the first hollow profile (1),
- a second hollow profile (2) is plugged, outside the core (3), into the first hollow profile (1), such that the second hollow profile (2) dips into the adhesive (5),
and so the second hollow profile (2) is surrounded by the first hollow profile (1) in an overlapping region and the core (3) has at least one boundary surface (4) which is arranged in a manner substantially parallel to an inner side (6) of the second hollow profile (2), and adhesive (5) is arranged between the core (3) and the inner side (6) of the second hollow profile (2).

## Revendications

1. Liaison adhésive d'un premier profilé creux (1) avec un second profilé creux (2), dans laquelle le second profilé creux (2) est entouré dans une zone de chevauchement par le premier profilé creux (1), dans laquelle un noyau (3) attaché au premier profilé creux (1) est disposé dans la zone de chevauchement à l'intérieur du premier profilé creux (1) et du second profilé creux (2), dans laquelle le noyau (3) présente au moins une face de limitation (4), qui est disposée essentiellement parallèlement et à proximité d'un côté intérieur (6) du second profilé creux (2), dans laquelle de la colle (5) est disposée entre le noyau (3) et le côté intérieur (6) du second profilé creux (2), **caractérisée en ce que** le noyau (3) est un corps plein en matériau cellulaire et est une pièce moulée gonflante, qui se dilate par chauffage et conduit de ce fait à une insonorisation du profilé creux.

2. Liaison adhésive selon la revendication 1, **caractérisée en ce que** le noyau (3) présente deux, trois faces de limitation (4), ou plus, qui sont disposées en face de deux, trois côtés intérieurs (6), ou plus, du second profilé creux, en particulier en face de tous les côtés intérieurs (6) du second profilé creux, dans laquelle de la colle (5) est disposée entre le noyau (3) et les côtés intérieurs opposés (6) du second profilé creux (2).

3. Liaison adhésive selon au moins une des revendications précédentes, **caractérisée en ce que** le noyau (3) forme la terminaison intérieure d'un bain d'adhésif.

4. Liaison adhésive selon au moins une des revendications précédentes, **caractérisée en ce que** le noyau (3) est parallélépipédique, cubique ou cylindrique.

5. Liaison adhésive selon au moins une des revendications précédentes, **caractérisée en ce que** le noyau (3) est fixé, en particulier vissé, sur un couvercle ou un fond (7) du premier profilé creux (1).

6. Liaison adhésive selon au moins une des revendications précédentes, **caractérisée en ce que** le noyau (3) présente un rebord (8), qui est serré dans le premier profilé creux (1).

7. Liaison adhésive selon au moins une des revendications précédentes, **caractérisée en ce que** de la colle (5) est disposée entre le côté extérieur du second profilé creux (2) et le côté intérieur (6) du premier profilé creux (1).

8. Procédé de fabrication d'une liaison adhésive selon la revendication 1, **caractérisé en ce que**
- on fixe un noyau (3) au moins temporairement au premier profilé creux (1), à l'intérieur du premier profilé creux (1) dans la zone de chevauchement, le noyau (3) étant un corps plein en un matériau cellulaire et étant une pièce moulée gonflante, qui se dilate par chauffage et conduit de ce fait à une insonorisation du profilé creux,
- on dispose de la colle (5) entre le noyau (3) et le côté intérieur (6) du premier profilé creux (1),
- on engage un second profilé creux (2) à l'extérieur du noyau (3) dans le premier profilé creux (1), de telle manière que le second profilé creux (2) plonge dans la colle (5),
de telle manière que le second profilé creux (2) soit entouré dans une zone de chevauchement par le premier profilé creux (1) et que le noyau (3) présente au moins une face de limitation (4), qui est disposée essentiellement parallèlement à un côté intérieur (6) du second profilé creux (2) et **en ce que** de la colle (5) est disposée entre le noyau (3) et le côté intérieur (6) du second profilé creux (2).
